# EUROPEAN PATENT SPECIFICATION

(11) **EP 3 112 778 B1**
(45) Date of publication and mention of the grant of the patent: **17.01.2018**
(21) Application number: 15174347.3
(22) Date of filing: 29.06.2015
(51) Int. Cl.: F25B 39/04, B23K 9/00

(54) **CONDENSER**
KONDENSATOR
CONDENSATEUR

(43) Date of publication of application: 04.01.2017
(73) Proprietor: MAHLE International GmbH, 70376 Stuttgart (DE)
(72) Inventor: Felber, Stefan, 71701 Schwieberdingen (DE); Haas, Christine, 57410 Bining (FR); Jung, Patrick, 57410 Rohrbach les Bitche (FR)
(74) Representative: Grauel, Andreas

(56) References cited:
- EP-A1- 0 822 378
- EP-A1- 1 764 569
- DE-A1-102011 085 837
- DE-C2- 4 238 853
- US-A1- 2005 126 214

## Description

### BACKGROUND OF THE INVENTION

### Field of the invention

The present invention relates to a condenser having a receiver for liquid refrigerant, particularly for a motor vehicle. The invention relates in addition to a motor vehicle having the condenser.

### Description of the Background Art

Condenser with an integrated receiver are known in the art as so called condenser modules. Such condenser modules have a receiver to store a defined amount of liquid refrigerant in order to compensate losses of the refrigerant in the refrigerant cycle over the life time of the condenser and additionally in order to achieve a stable sub-cooling of the refrigerant in the sub-cooling area of the condenser which is located downstream of the receiver.

Such condenser modules are known from DE 42 38 853 C2 disclosing a condenser according to the preamble of claim 1. In the art condenser modules are known which have a receiver with an integrated dryer and filter assembly which is located in the receive tube of the condenser module. The receiver tube usually has two opposite open ends which are closed by closing means. Usually one of the two ends is closed by a removable plug in order to be able to service the dryer and filter assembly by removing and exchanging the assembly. The other end of the receiver tube is usually closed by a disc which is brazed to the tube. Therefore the tube can only be opened by removing the removable plug.

Other receivers of condenser modules are closed on both ends using discs brazed to the tube such that the dryer of the receiver may not be serviced during life time of the condenser. In this case the dryer is located in the receiver tube before brazing the condenser including brazing the receiver tube. Such condenser modules are disclosed by DE 42 38 853 C2 too. The brazing process is only possible for dryers which will not be removed. Otherwise a flame brazing process might be used. This flame brazing creates high temperatures inside the receiver which might destroy dryer cartridges of plastic material. Therefore flame brazing is not always possible.

Besides brazing of such discs to close the open end of a receiver tube it is known to use the laser welding process to fasten the disc to the tube and to tighten the receiver tube. Such laser welding process creates higher temperatures too and additionally the costs for such a laser welding device is quite high, such that laser welding increases the production costs of the condenser module. Therefore laser welding is only acceptable by manufacturing an annually high amount of such condenser modules.

### SUMMARY OF THE INVENTION

It is therefore an object of the present invention to provide an improved condenser having a receiver.

The object is achieved with a condenser having a receiver with the features of claim 1.

An exemplary embodiment relates to a condenser having a receiver for storing liquid refrigerant, the condenser having a heat exchanger block with at least one manifold and with a tube and fin block, wherein the tubes communicate with the at least one manifold for introducing and releasing refrigerant to or from the heat exchanger block, wherein the receiver is located adjacent of one of the manifolds, wherein the receiver has a tube with at least one open tube end and with at least one disc, wherein the disc is located within the tube at the tube end in order to close the tube end, characterized in that the disc is fluid tight connected with the tube end by cold metal transfer welding. The other end of the receiver might be closed by a plug or by an additional disc. The cold metal transfer welding reduces the temperatures of the welded elements such that this process allows welding of pieces including plastic elements in their interior.

Furthermore it is of advantage that the tube of the receiver has two opposite tube ends which both are closed by a respective disc, wherein said discs are located within the tube at the respective tube end and wherein said respective disc is connected with the tube end by cold metal transfer welding. Therefore a plastic filter and dryer element might be located inside the tube of the receiver and nevertheless the receiver might be closed using two discs which are closed by cold metal transfer welding.

According to another embodiment of the invention it is of advantage that the cross section of the disc in the plane of the disc corresponds at least substantially to the cross section of the tube at the respective tube end. Accordingly it is easy to close the end of the tube of the receiver fluid tight since the gap between tube end of the wall of tube end and the disc is quite narrow. Therefore the cold metal transfer welding process allows a stable and fluid tight closing of the tube end of the receiver.

According to one embodiment of the invention it is preferably that the disc is a flat disc. Therefore the volume of the receiver tube is not strongly affected by using a flat disc as closure element.

Furthermore it is of advantage that the disc has a basically flat central portion defining plane and a marginal portion which is bend in a direction out of the plane of the central portion. Therefore a secure and fluid tight connection between the marginal portion and the tube is possible.

According to another object of the invention it is of advantage that the marginal portion is angled with respect to the central portion, wherein the angle between the marginal portion and the plane of the central portion is about 80° to 90°. Therefore the disc might be fit into the tube end by means of a sliding process or by a press fit, the secure the position of the disc inside the tube before welding.

It is furthermore of advantage that the marginal portion is located in parallel with the tube wall of an end of said tube.

A very secure fastening of disc is possible if the marginal portion of the disc is welded to the tube wall by cold metal transfer welding.

Furthermore it is of advantage that the tube of the receiver is an extruded tube, a welded tube or a deep impact extrusion tube. Therefore the tube might be made of aluminum or from an aluminum alloy or e.g. from a stainless steel material.

It is furthermore of advantage that the tube of the receiver is located in parallel to a manifold of the heat exchanger block, wherein the length of the tube of the receiver is shorter or as long as the length of the manifold.

Further scope of applicability of the present invention will become apparent from the detailed description given hereafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description hereinbelow and the accompanying drawings which are given by way of illustration only, and thus, are not limitive of the present invention, and wherein:
- Fig. 1: a schematic view of a condenser with a receiver,
- Fig. 2: shows a tube of a receiver in parallel with a manifold of a condenser,
- Fig. 3: shows a disc for closing the end of the tube of the receiver,
- Fig. 4: shows a disc inserted in the end of the tube of the receiver, and
- Fig. 5: shows a sequence of pictures explaining the cold metal transfer welding process.

### DETAILED DESCRIPTION

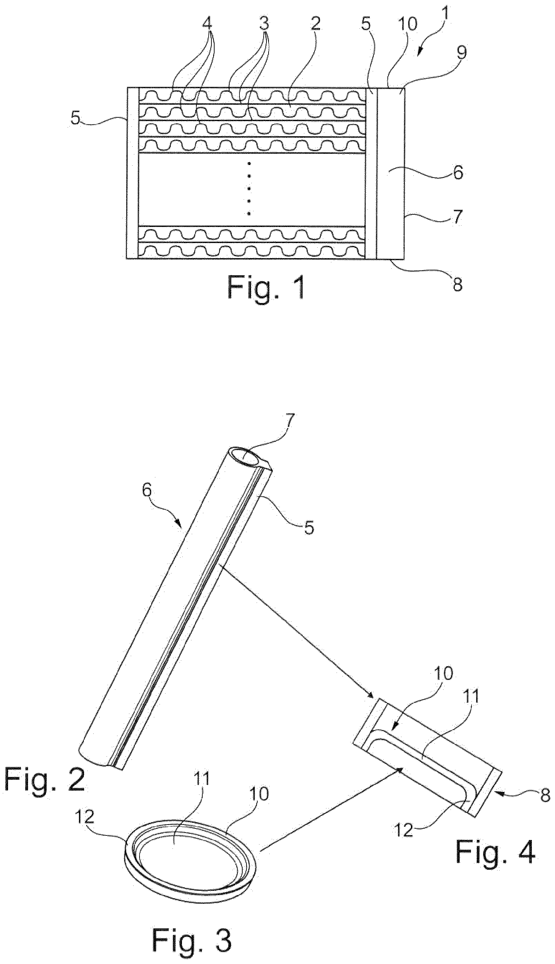

Fig. 1 shows a schematic view of a condenser 1 with a heat exchanger block 2 with tubes 3 and fins 4. The tubes 3 contain flow channels for flow of refrigerant through the tubes 3. Between two adjacent tubes 3 fins 4 are located to increase the heat exchange rate between air passing through the channels between two adjacent tubes 3 and the refrigerant passing through the tubes 3.

On both sides of the heat exchanger block 2 manifolds 5 are located. The tubes 3 of the heat exchanger block 2 are connected to the manifolds 5 to feed refrigerant from the tubes 3 to the manifolds 5 or to receive refrigerant from the manifolds 5.

Adjacent to one of the manifolds 5 a liquid receiver 6 is arranged and fluid connected to the manifold 5 to receive refrigerant from the manifold 5 and to feed refrigerant to the manifold 5. Usually between the manifold 5 and the receiver two fluid channels are arranged for flowing refrigerant to the receiver and to release refrigerant out of the receiver to the manifold.

The receiver 6 is made of a tube 7 which is closed on both tube ends 8, 9. At least one tube end 8, 9 is closed or both tube ends 8, 9 are closed by a disc 10. Maybe one tube end 8, 9 might be closed by a removable plug. Within the volume of the receiver 6 a filter and/or a dryer might be located to filter the refrigerant and to remove water particles out of the refrigerant.

Fig. 2 shows a schematic view of a receiver 6 with a tube 7 and an adjacent located manifold 5. The receiver is arranged in parallel with the manifold and the length of the tube 7 of the receiver is at least almost the length of the manifold. In other embodiments, the tube 7 of the receiver 6 might be longer or even shorter than the length of the manifold 5.

Fig. 3 shows a disc 10, which might be used to close a tube end 8, 9 of the receiver. This disc 10 might be located in the tube end 8, 9 of the tube 7 of the receiver and will be fluid tight connected to the tube 7 of the receiver 6. The disc will be connected by cold metal transfer welding to achieve a secure fastening over life time of the condenser 1 and a fluid tight fastening to close the end 8, 9 of the tube 7 of the receiver 6.

As can be seen from Fig. 3 the disc 10 has a cross section in the plane of the disc 10 which corresponds at least substantially to the cross section of the tube 7 at the respective tube end 8, 9. This leads to a more secure closing of the tube end since the gap between the disc and the tube wall at the tube end is quite small. This can be seen in Fig. 4 too.

The disc 10 has a basically flat central portion 11 defining plane and it has a marginal portion 12 which is bend in a direction out of the plane of the central portion 11. As can be seen in Fig. 3 and 4, the marginal portion 12 is angled with respect to the central portion 11, wherein the angle between the marginal portion 12 and the plane of the central portion 11 is about 80° to 90°, and especially 90°.

According to another embodiment of the invention the disc is a flat disc.

Fig. 4 shows schematically that the disc is inserted in the tube 7 at its tube end 8. The marginal portion is located adjacent to the wall of the tube 7 at the tube end 8. At the area of the marginal portion 12 and the end 8 of the tube 7, the disc and the tube 7 are connected and the tube is fluid tight closed by cold metal transfer welding. The disc 10 is welded to the tube wall of the tube 7 of the receiver 6. As can be seen, the marginal portion 12 is located in parallel with the tube wall of a tube end 8, 9 of said tube 7. Therefore the marginal portion 12 is welded to the tube wall by cold metal transfer welding.

The tube 7 of the receiver 6 is according to one embodiment an extruded tube, a welded tube or a deep impact extrusion tube. The tube is preferably made from aluminum or an aluminum alloy or from a stainless steel.

As can be seen from Fig. 4 the tube 7 of the receiver 6 is located in parallel to a manifold 5 of the heat exchanger block 2, wherein the length of the tube 7 of the receiver 6 is shorter or as long as the length of the manifold 5.

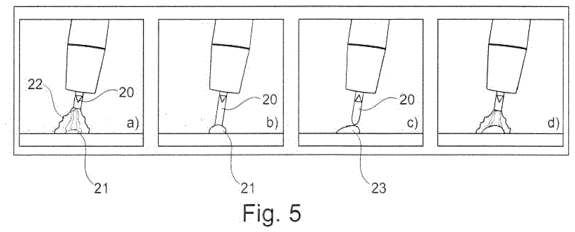

Fig. 5 shows a sequence of four drawings a) to d) to explain the cold metal transfer welding process. In a first step a) a piece welding material 20 will be moved in the direction of the welding partners which should be connected by the process. A light arc 22 is created which melts the material to be welded and creates a melting bath 21 of molten material. In case the welding material 20 hits the melting bath 21, see drawing b), the light arc 22 disappears and the welding current will be reduced by the control of the process. In the next step, please see c), the welding material 20 will be moved backwards and the creation of a material drop 23 at the elements to be welded will be supported. The welding current is still low. Since the welding material 20 no longer contacts the melting bath 21, the welding current will be increased again and a light arc is created again, see d) and the process starts again at a). During this process the energy introduced in the elements to be welded is reduced and a lower temperature of the elements to be welded is achieved.

## Claims

1. Condenser (1) having a receiver (6) for storing liquid refrigerant, the condenser (1) having a heat exchanger block (2) with at least one manifold (5) and with a tube (3) and fin (4) block, wherein the tubes (3) communicate with the at least one manifold (5) for introducing and releasing refrigerant to or from the heat exchanger block (2), wherein the receiver (6) is located adjacent to one of the manifolds (5), wherein the receiver (6) has a tube (7) with at least one open tube end (8,9) and with at least one disc (10), wherein the disc (10) is located within the tube (7) at the tube end (8,9) in order to close the tube end (8,9), **characterized in that** the disc (10) is fluid tight connected with the tube end (8,9) by cold metal transfer welding.

2. Condenser (1) according to claim 1, **characterized in that** the tube (7) of the receiver (6) has two opposite tube ends (8,9) which both are closed by a respective disc (10), wherein said discs (10) are located within the tube (7) at the respective tube end (8,9) and wherein said respective disc (10) is connected with the tube end (8,9) by cold metal transfer welding.

3. Condenser (1) according to claim 1 or 2, **characterized in that** the cross section of the disc (10) in the plane of the disc (10) corresponds at least substantially to the cross section of the tube (7) at the respective tube end (8,9).

4. Condenser (1) according to one of the preceding claims, **characterized in that** the disc (10) is a flat disc (10).

5. Condenser (1) according to one of the preceding claims 1 to 3, **characterized in that** the disc (10) has a basically flat central portion (11) defining plane and a marginal portion (12) which is bend in a direction out of the plane of the central portion (11).

6. Condenser (1) according to claim 5, **characterized in that** the marginal portion (12) is angled with respect to the central portion (11), wherein the angle between the marginal portion (12) and the plane of the central portion (11) is about 80° to 90°.

7. Condenser (1) according to claim 6, **characterized in that** the marginal portion (12) is located in parallel with the tube wall of a tube end (8,9) of said tube (7).

8. Condenser (1) according to claim 7, **characterized in that** the marginal portion (12) is welded to the tube wall by cold metal transfer welding.

9. Condenser (1) according to one of the preceding claims, **characterized in that** the tube (7) of the receiver (6) is an extruded tube, a welded tube or a deep impact extrusion tube.

10. Condenser (1) according to one of the preceding claims, **characterized in that** the tube (7) of the receiver (6) is located in parallel to a manifold (5) of the heat exchanger block (2), wherein the length of the tube (7) of the receiver (6) is shorter or as long as the length of the manifold (5).

## Patentansprüche

1. Kondensator (1) mit einer Aufnahme (6) zum Speichern von flüssigem Kältemittel, wobei der Kondensator (1) einen Wärmetauscherblock (2) mit mindestens einem Verteiler (5) und mit einem Block aus Rohren (3) und Rippen (4) aufweist, wobei die Rohre (3) mit dem mindestens einen Verteiler (5) verbunden sind, um Kältemittel in den Wärmetauscherblock (2) einzuführen oder daraus abzulassen, wobei sich die Aufnahme (6) neben einem der Verteiler (5) befindet, wobei die Aufnahme (6) ein Rohr (7) mit mindestens einem offenen Rohrende (8, 9) und mit mindestens einer Scheibe (10) aufweist, wobei sich die Scheibe (10) innerhalb des Rohres (7) an dem Rohrende (8, 9) befindet, um das Rohrende (8, 9) zu schließen, **dadurch gekennzeichnet, dass** die Scheibe (10) durch Cold-Metal-Transfer-Schweißen flüssigkeitsdicht mit dem Rohrende (8, 9) verbunden ist.

2. Kondensator (1) nach Anspruch 1, **dadurch gekennzeichnet, dass** das Rohr (7) der Aufnahme (6) zwei gegenüberliegende Rohrenden (8, 9) aufweist, die beide durch eine jeweilige Scheibe (10) geschlossen werden, wobei sich die Scheiben (10) innerhalb des Rohres (7) an dem jeweiligen Rohrende (8, 9) befinden und wobei die jeweilige Scheibe (10) durch Cold-Metal-Transfer-Schweißen mit dem Rohrende (8, 9) verbunden ist.

3. Kondensator (1) nach Anspruch 1 oder 2, **dadurch gekennzeichnet, dass** der Querschnitt der Scheibe (10) in der Ebene der Scheibe (10) zumindest im Wesentlichen dem Querschnitt des Rohres (7) an dem jeweiligen Rohrende (8, 9) entspricht.

4. Kondensator (1) nach einem der vorhergehenden Ansprüche, **dadurch gekennzeichnet, dass** die Scheibe (10) eine flache Scheibe (10) ist.

5. Kondensator (1) nach einem der vorhergehenden Ansprüche 1 bis 3, **dadurch gekennzeichnet, dass** die Scheibe (10) eine einen grundsätzlich flachen mittigen Abschnitt (11) definierende Ebene und einen marginalen Abschnitt (12), der in eine Richtung aus der Ebene des mittigen Abschnitts (11) gebogen ist, aufweist.

6. Kondensator (1) nach Anspruch 5, **dadurch gekennzeichnet, dass** der marginale Abschnitt (12) in Bezug auf den mittigen Abschnitt (11) gewinkelt ist, wobei der Winkel zwischen dem marginalen Abschnitt (12) und der Ebene des mittigen Abschnitts (11) ungefähr 80 ° bis 90 ° beträgt.

7. Kondensator (1) nach Anspruch 6, **dadurch gekennzeichnet, dass** sich der marginale Abschnitt (12) parallel zur Rohrwand eines Rohrendes (8, 9) des Rohres (7) befindet.

8. Kondensator (1) nach Anspruch 7, **dadurch gekennzeichnet, dass** der marginale Abschnitt (12) durch Cold-Metal-Transfer-Schweißen an die Rohrwand geschweißt ist.

9. Kondensator (1) nach einem der vorhergehenden Ansprüche, **dadurch gekennzeichnet, dass** das Rohr (7) der Aufnahme (6) ein extrudiertes Rohr, ein geschweißtes Rohr oder ein Tieffließpressrohr ist.

10. Kondensator (1) nach einem der vorhergehenden Ansprüche, **dadurch gekennzeichnet, dass** sich das Rohr (7) der Aufnahme (6) parallel zu einem Verteiler (5) des Wärmetauscherblocks (2) befindet, wobei die Länge des Rohres (7) der Aufnahme (6) kürzer als oder so lang wie die Länge des Verteilers (5) ist.

## Revendications

1. Condenseur (1) ayant un réservoir (6) pour stocker un réfrigérant liquide, le condenseur (1) ayant un bloc d'échangeur de chaleur (2) comprenant au moins un collecteur (5) et comprenant un bloc de tubes (3) et d'ailettes (4), où les tubes (3) communiquent avec le collecteur (5) au moins au nombre de un, pour introduire et libérer du réfrigérant dans et depuis le bloc (2) de l'échangeur de chaleur, où le réservoir (6) est placé en étant adjacent à l'un des collecteurs (5), où le réservoir (6) a un tube (7) avec au moins une extrémité tubulaire ouverte (8, 9) et avec un moins un disque (10), où le disque (10) est placé à l'intérieur du tube (7), au niveau de l'extrémité tubulaire (8, 9), afin de fermer l'extrémité tubulaire (8, 9), **caractérisé en ce que** le disque (10) est relié à l'extrémité tubulaire (8, 9), en étant étanche au fluide, par soudage à transfert de métal froid.

2. Condenseur (1) selon la revendication 1, **caractérisé en ce que** le tube (7) du réservoir (6) a deux extrémités tubulaires opposées (8, 9) qui sont toutes les deux fermées par un disque respectif (10), où lesdits disques (10) sont placés à l'intérieur du tube (7), au niveau de l'extrémité tubulaire respective (8, 9), et où ledit disque respectif (10) est relié à l'extrémité tubulaire (8, 9) par soudage à transfert de métal froid.

3. Condenseur (1) selon la revendication 1 ou 2, **caractérisé en ce que** la section du disque (10), dans le plan du disque (10), correspond au moins pratiquement à la section du tube (7), au niveau de l'extrémité tubulaire respective (8, 9).

4. Condenseur (1) selon l'une quelconque des revendications précédentes, **caractérisé en ce que** le disque (10) est un disque plat (10).

5. Condenseur (1) selon l'une quelconque des revendications précédentes 1 à 3, **caractérisé en ce que** le disque (10) a une partie centrale (11) essentiellement plate définissant un plan et une partie marginale (12) qui est recourbée dans une direction se situant hors du plan de la partie centrale (11).

6. Condenseur (1) selon la revendication 5, **caractérisé en ce que** la partie marginale (12) forme un angle par rapport à la partie centrale (11), où l'angle formé entre la partie marginale (12) et le plan de la partie centrale (11) est compris entre 80° et 90° environ.

7. Condenseur (1) selon la revendication 6, **caractérisé en ce que** la partie marginale (12) est placée en étant parallèle à la paroi tubulaire d'une extrémité tubulaire (8, 9) dudit tube (7).

8. Condenseur (1) selon la revendication 7, **caractérisé en ce que** la partie marginale (12) est soudée sur la paroi tubulaire par soudage à transfert de métal froid.

9. Condenseur (1) selon l'une quelconque des revendications précédentes, **caractérisé en ce que** le tube (7) du réservoir (6) est un tube extrudé, un tube soudé ou bien un tube formé par extrusion à impact profond.

10. Condenseur (1) selon l'une quelconque des revendications précédentes, **caractérisé en ce que** le tube (7) du réservoir (6) est placé en étant parallèle à un collecteur (5) du bloc (2) de l'échangeur de chaleur, où la longueur du tube (7) du réservoir (6) est plus courte ou aussi longue que la longueur du collecteur (5).
